# EUROPEAN PATENT APPLICATION

(11) **EP 3 454 301 A1**
(43) Date of publication of application: **13.03.2019**
(21) Application number: 17190047.5
(22) Date of filing: 08.09.2017
(51) Int. Cl.: G06T 7/73, G06T 7/11, G06T 7/136

(54) **METHOD FOR DETECTING AND LABELLING CORONARY ARTERY CALCIUM**

(71) Applicant: Siemens Healthcare GmbH, 91052 Erlangen (DE)
(72) Inventor: Durlak, Felix, 90579 Langenzenn (DE); Wels, Michael, 96047 Bamberg (DE); Schwemmer, Chris, 91301 Forchheim (DE); Sühling, Michael, 91052 Erlangen (DE)

(57) **Abstract**

Method for detecting and labelling coronary artery calcium, comprising the steps:
- Providing medical imaging dataset, in particular a computer tomography dataset, of a region of interest (2) comprising at least two different arteries (3-6),
- Detecting at least one candidate voxel or group of voxels (7-11) for the presence of coronary artery calcium,
- Providing a reference dataset that describes a respective distance of each position in the reference dataset to at least one artery (3-6) or to a feature of the respective artery (3-6),
- Determining at least one distance value for each candidate voxel or group of voxels (7-11) that describes a respective distance to at least one artery (3-6) or to a feature of the respective artery (3-6) by determining a respective position of the candidate voxel or group of voxels (7-11) in the reference dataset by performing a registration between the provided dataset and the reference dataset,
- Determining a feature vector for each candidate voxel or group of voxels (7-11) that describes multiple parameters of the candidate voxel or group of voxels (7-11), wherein the distance value is one of the parameters,
- Applying a classifier to the feature vector to label the candidate voxel or group of voxels (7-11).

## Description

The invention concerns a method for detecting and labelling coronary artery calcium. The invention also concerns a processing unit, a computer program and a computer-readable storage medium.

The early detection and risk assessment of coronary heart disease is of high interest, since this disease is a major cause of death. A strong predictor for coronary heart disease is the amount of coronary artery calcium (CAC). The amount of CAC can be measured via a computer tomography (CT) scan. A common scoring method to quantify calcifications is the Agatston method, which provides a single score which quantifies the total arterial calcium in the heart. Alternatively volume scoring or mass scoring can be used. All these methods are essentially similar. First calcifications are found in the computer tomography data by thresholding, then for each plaque it is determined if it is a relevant calcification inside a coronary artery and in which artery it is located, and then a weighted sum is taken. The identification step typically requires manual identification of each plaque by a cardiologist or a highly skilled technician.

A method and system for automatic coronary stenosis detection in computed tomography (CT) data is disclosed in US 20100076296, wherein a classifier, such as a probabilistic boosting tree (PBT) classifier, is used to detect stenosis regions along the centerlines in the input cardiac CT volume. The classifier classifies each of the control points that define the coronary artery centerlines as a stenosis point or a non-stenosis point.

A method for automatically detecting and quantifying coronary calcium using x-ray computed tomography (CT) is disclosed in WO 2003046833 A3.

Further, an approach for an automatic identification of the plaques is known from the document US 2013/0094749 A1. The measured data is registered to a 3D model of the heart that describes the anatomical structures. Based on the registration results each calcium plaque which is located in one of the identified coronary arteries can be automatically identified with a particular coronary artery. When a plaque is determined to be within the realm of a certain coronary artery the determination could still be a false positive. Therefore additional factors of the plaques are considered, such as direction, vesselness, relation to other plaques, shapes, etc. In the decision making process, pattern classification methods, such as support vector machines, neural networks or linear classifiers can be used.

The quality of the automatic identification of the plaques and therefore the error in the resulting calcium score strongly depend on the quality of the 3D model used for the identification of the anatomical structures. Since the anatomy varies from patient to patient, using an atlas based model will always result in errors. Alternatively a patient specific model could be used. This would however require contrast enhanced measurements, e.g. a cardiac computed tomography angiography (CCTA). A high quality automatic registration would therefore only be possible with an additional X-ray exposure of the patient.

The object of the present invention is therefore to provide an improved method for detecting and labelling coronary artery calcium that can improve the quality of the labelling and therefore e.g. reduce the error of a calcium score without requiring additional measurements.

This problem is solved by a method for detecting and labelling coronary artery calcium, comprising the steps:
- Providing a medical imaging dataset, in particular a computer tomography dataset, of a region of interest comprising at least two different arteries,
- Detecting at least one candidate voxel or group of voxels for the presence of coronary artery calcium,
- Providing a reference dataset that describes a respective distance of each position in the reference dataset to at least one artery or to a feature of the respective artery,
- Determining at least one distance value for each candidate voxel or group of voxels that describes a respective distance to at least one artery or to a feature of the respective artery by determining a respective position of the candidate voxel or group of voxels in the reference dataset by performing a registration between the provided dataset and the reference dataset,
- Determining a feature vector for each candidate voxel or group of voxels that describes multiple parameters of the candidate voxel or group of voxels, wherein the distance value is one of the parameters,
- Applying a classifier to the feature vector to label the candidate voxel or group of voxels.

The proposed method uses a reference dataset to determine a distance of each candidate voxel or group of voxels to at least one artery or to a feature of the respective artery. This distance and further features of the feature vector are then used to classify the candidate voxel or group of voxels. The distance value or distance values for each candidate voxel or group of voxels can be considered to be vague spatial knowledge that provides some information about the position of the respective voxel or group of voxels but does not necessarily need to be exact. Since the classifier can depend on a multitude of parameters of the feature vector errors in the registration or a mismatch between the reference dataset and the real anatomy of the patient for whom the tomography dataset was recorded are less relevant for the final classification than in the previously discussed purely model based approach to classifying individual pixels or voxels. This allows very good classification results when e.g. a probabilistic atlas based on measurement data from a multitude of other patients is used as reference dataset. It is therefore not necessary to perform an additional cardiac computed tomography angiography for the patient for whom the medical imaging dataset, in particular a computer tomography dataset, was recorded.

The provided medical imaging dataset, in particular a computer tomography dataset, can be recorded without contrast enhancement, e.g. as non-contrasted coronary computed-tomography (CCT). The proposed algorithm has a relatively low complexity. A registration of 3D-datasets is a common task in medical imaging and can be performed at very low runtimes, especially when a rough registration is sufficient. Classifiers, especially classifiers based on machine-learning that operate on precalculated feature vectors can also be implemented to run at very fast runtimes. The proposed method can e.g. run in less than 30 seconds on a modern multicore processor when 29 parameters are used in the feature vector and a random forest classifier with 40 trees and a tree depth of 20 is used.

The arteries can be the left anterior descending coronary artery (LAD), the left circumflex coronary artery (LCX), the right coronary artery (RCA) and the aorta. The reference dataset can provide distances for each of these arteries or for a subset of these arteries. Distances can be measured from a centerline of the respective artery that can be automatically or manually determined while generating the reference dataset.

Individual candidate voxels can be detected by thresholding the provided computer tomography dataset. E.g. all voxels with an attenuation value of more than 130 Hounsfield units (HU) can be candidate voxels. In order to form candidate voxel groups a region growing algorithm with recursive connected component labelling for groups of voxels can be applied. To discard candidates that are caused by noise, candidate voxel groups that are smaller than a given volume, i.e. 1.5 mm³, can be discarded. To reduce the search space a mask can be applied to the provided computer tomography dataset to limit the search to a certain region of the computer tomography dataset. The masking can be based on a segmentation of the pericardium. This can e.g. be achieved by applying a model-based detection framework with data-driven post-refinements through marginal space learning. This approach is e.g. discussed in H. Zhong, et al., "Automatic Heart Isolation in 3D CT images", International MICCAI Workshop on Medical Computer Vision, p. 165, Springer 2013.

The registration between the provided dataset and the reference dataset can be a rigid registration. The registration can be based on information gained from segmenting the pericardium.

Some of the steps of the inventive method are not mutually dependent and their order can be swapped. E.g. the detection of the candidate voxel or group of voxels can be performed prior to the registration between the provided dataset and the reference dataset, after this registration or in parallel to that registration.

The classifier can classify if the candidate voxel or group of voxels depicts coronary artery calcium and which one of the arteries comprises the coronary artery calcium. In one embodiment the classifier could classify if a candidate voxel or group of voxels is coronary artery calcium in the left anterior descending coronary artery, in the left circumflex coronary artery, is the right coronary artery or in the aorta or if it is not coronary artery calcium.

The classifier can be trained by machine learning using multiple training datasets. The training datasets can comprise feature vectors and a classification for each feature vector. Instead of using feature vectors in the training datasets, medical imaging datasets, in particular computer tomography datasets, can be used that especially comprise CCT and CCTA data recorded for the same patient. The classification can be performed manually by one or more experts or by a different classification algorithm that e.g. has a slow running time and/or that uses the CCTA data.

Preferably the classifier is a random forest classifier. Random forest classifiers combine multiple weak learners to provide a strong learner. A random forest uses a multitude of decision trees that each perform a classification. The final classification can be determined by a majority vote of the trees. Random forest can be trained by first defining a set of features and then for each decision in each decision tree picking a certain number of samples and a certain number of features and then finding the feature and the split point for this feature that performs an optimal split of the samples at the tree position. In experiments a very good quality of classification was reached at 40 trees in the forest, a tree depth of 20 splits, a sample size of 20 samples per split and a selection of 5 features per split. The overall number of features used was 29. The usable features will be discussed later. To determine these parameters grid search optimization via cross-validation was performed. The search grid for the number of trees was 30, 40, 50, 60, 70, 80. The search grid for the tree depth was 5, 10, 15, 20, 25, 30. The search grid for the number of samples per split was 15, 20, 25, 30, 35, 40. The search grid for the number of features per split was 2,3, 4, 5, 6, 7, 8, 9. The parameter grids were designed heuristically based on experience and an overall expected runtime.

The reference dataset can be generated from individual computer tomography datasets recorded from several patients. Especially cardiac computed tomography angiography can be used as input data to determine the reference dataset.

A centerline can be determined for at least one of the arteries in each of the individual computer tomography datasets, wherein a distance map is calculated for each individual computer tomography dataset that describes the distance of each position or voxel of the respective dataset from the respective centerline, wherein the reference dataset is determined from the distance maps. The reference dataset can especially be determined by averaging the distance maps. The result is a probabilistic atlas that supplies vague spatial knowledge.

The individual computer tomography datasets or the distance maps calculated from these datasets can be transformed to a common coordinate system for generating the reference dataset. This can be achieved e.g. by selecting one of the individual computer tomography datasets, e.g. randomly, and transforming all the datasets or distance maps to this coordinate system. For this transformation the pericardium in every image can be segmented as discussed above with reference to the paper by H. Zhong et al. Principle component analysis can then be applied to the segmented pericardium to find the center of mass and the eigenvector corresponding to the biggest eigenvalue. With this data a rigid registration can be performed.

The feature vector can comprise respective distance values that describe a respective distance to at least two arteries or to features of these arteries and/or at least one difference value describing the difference between the respective distances of the candidate voxel or group of voxels to two arteries or to respective features of two arteries and/or the position of the candidate voxel or group of voxels with respect to the pericardium and/or the distance of the candidate voxel or group of voxels from the pericardium as parameters.

The pericardium can be segmented as previously described. A bounding box can be defined with respect to the segmented pericardium and a x-, y- and z-position in this bounding box can be used to define the position of the candidate voxel or group of voxels with respect to the pericardium. The distances of the voxel or group of voxels from the arteries can be read from the reference dataset after the registration. Differences can be calculated by a subtracting distances read from the reference dataset. The distances from the aorta, the left anterior descending coronary artery, the left circumflex coronary artery and/or the right coronary artery can be used as parameters. Preferably all these distances are used as parameters. Distance differences can be calculated for all different pairs of these distances and used as parameters. Alternatively only some of these differences could be used as parameters.

The feature vector can additionally or alternatively comprise a respective parameter that describes the volume of the candidate group of voxels and/or the mean value and/or the maximum value and/or the variance of the voxel values of the candidate group of voxels. These parameters are intrinsic parameters of the candidate group of voxels and therefore of the probable calcification that is depicted by this group of voxels. These parameters are especially useful to distinguish between real calcifications and artifacts e.g. caused by noise or non-calcification structures that are strongly absorbing.

It can also be advantageous to analyze the immediate surroundings of the candidate voxel or group of voxels. A hull group of voxels can be defined that surrounds the candidate voxel or group of voxels, wherein the feature vector comprises at least one parameter that depends on the voxel values of the voxels of the hull group. The feature vector can comprise a respective parameter that describes the mean value, the variance, the minimum, the maximum and/or the difference between the maximum and the minimum of the voxel values of the voxels of the hull group. Additionally or alternatively the difference between the mean value of the voxel values of the hull group and the mean value of the voxel values of the candidate group of voxels can be used as parameter.

For capturing morphological information of the potential calcification and its surroundings data based on convolutions can be used. The feature vector can comprise at least one parameter that is calculated by convolving the provided dataset with a given kernel and taking the voxel value at the position of the candidate voxel or one of the voxels of the candidate group of voxels. Preferably the value is taken at the position of the voxel with the highest voxel value prior to the convolution. The convolution kernel can preferably be a Gaussian kernel with a given standard deviation. Preferably multiple convolution based parameters are used in the feature vector, each calculated by using a Gaussian convolution kernel with a different standard deviation. E.g. parameters for a standard deviation of 0.5 mm, 1.0 mm, 2.0 mm, 3.0 mm and 4.0 mm can be used.

The labeled candidate voxels or voxel groups can be used to calculate a separate calcium score for each of the arteries or a calcium score can be calculated by weighting the candidate voxels or groups of voxels according to their labels. The distinction between the different arteries that can contain the calcifications either by using a separate scoring or by adjusting the weight of the detected calcium accordingly can allow for an improved prediction of coronary heart disease.

Besides the inventive method the invention also concerns a processing unit, especially a processing unit of a computer tomography device, configured to perform the method according to the present invention.

The invention also concerns a computer program that can be directly loaded into a memory unit of a processing unit, especially a processing unit of a computer tomography device, the computer program comprising instructions for performing the steps of the method according to the present invention when the program is executed on the processing unit.

The invention also concerns a computer-readable storage medium containing electronically readable instructions comprising the computer program according to the present invention.

The above and further aspects, features and other advantages of the present invention will be more clearly understood from the following detailed description taken in conjunction with the accompanying drawing which show schematically:
- Fig. 1: a slice of a coronary computer-tomography scan with additional overlaid information used in an embodiment of a method according to the present invention,
- Fig. 2: a flow chart of an embodiment of the method according to the present invention, and
- Fig. 3: a computer tomography device that comprises a processing unit according to an embodiment of the present invention.

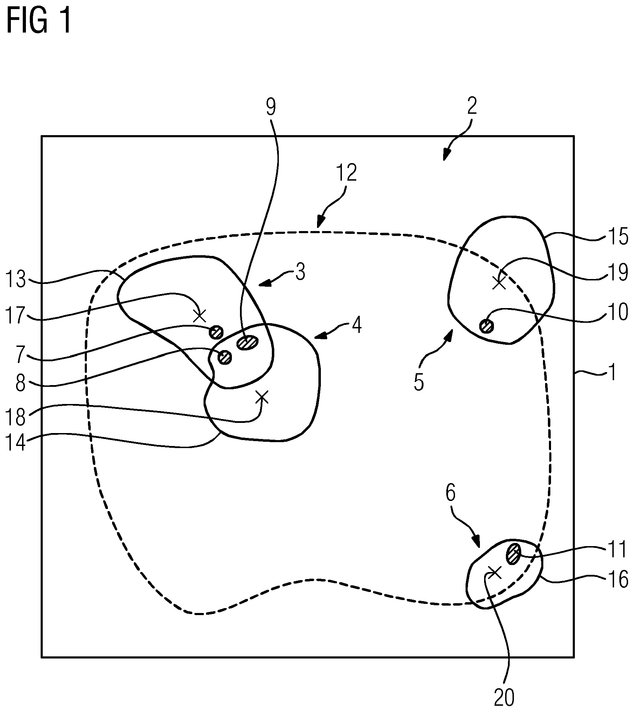

Fig. 1 shows a single slice 1 of a computer tomography dataset that is recorded to determine coronary artery calcium. The dataset depicts a region of interest 2 of a patient that depicts the area of the heart and comprises four different arteries 3-6. The dataset is recorded without a contrast agent. Therefore the arteries 3 - 6 do not show strong contrast and cannot be reliably segmented in the dataset.

Candidate voxels or groups of voxels 7-11 are detected in the dataset by first applying a threshold of e.g. 130 Hounsfield units and selecting voxels with a higher absorption. To group the voxels, a region growing algorithm can be used and regions that do not reach a minimum size of e.g. 1.5 mm³ can be discarded as noise.

To determine, wether a certain candidate group of voxels 7 - 11 depicts coronary artery calcium or some other calcification or feature and to determine which of the arteries 3 - 6 contains the respective group of voxels, a classification algorithm is used that uses a previously prepared reference dataset that describes a respective distance of each position in the reference dataset to the centerline 17 - 20 of the arteries 3-6. The reference dataset is registered to the original computer tomography dataset to determine the distance values for the candidate group of voxels 7-11. This distances and other information are then used as parts of a feature vector that is used to classify the candidate group of voxels 7 - 11.

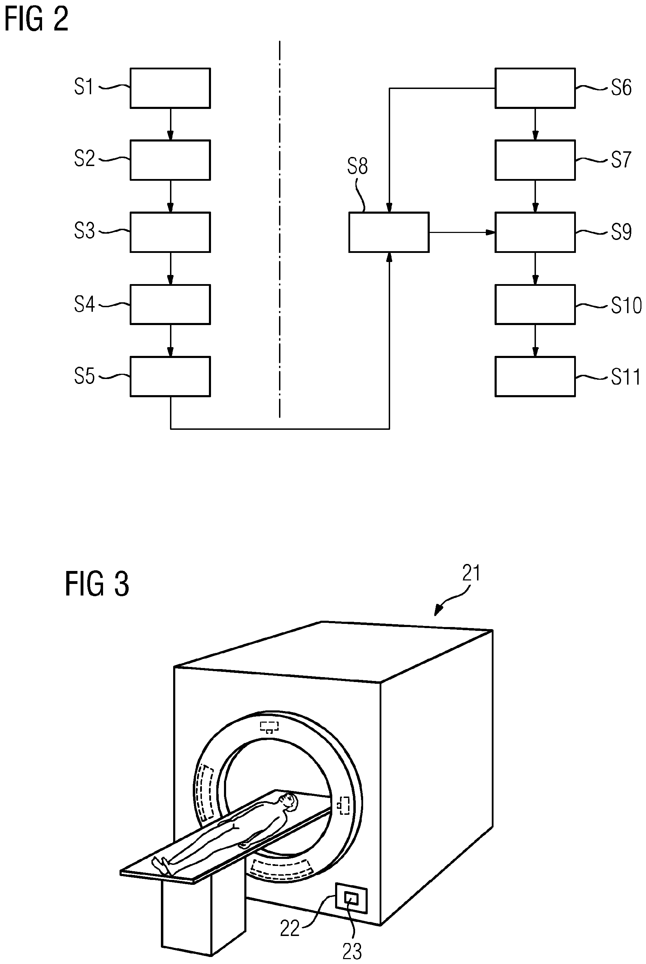

The method for detecting and labelling coronary artery calcium is now discussed in detail with reference to the flow chart shown in fig. 2. The steps S1 - S5 correspond to the generation of the reference dataset and can be performed at an arbitrary time previous to the other steps. The reference dataset generated in the steps S1 - S5 can be used for a multitude of examinations and can e.g. be provided by the manufacturer of the computer tomography device or can be part of a computer program that is used to detect and label coronary artery calcium.

The reference dataset can be a probabilistic anatomical atlas generated from anatomical data from a multitude of patients. To generate the reference dataset multiple individual computer tomography datasets are recorded from several patients in step S1. A contrast enhanced computer tomography, e.g. a cardiac computed tomography angiography, can be used to provide a clear contrast for the arteries 3 - 6 to allow for easy segmentation.

In step S2 the arteries 3 - 6 are segmented in each of the datasets. Approaches for the segmentation of these structures are well known in the prior art and will not be discussed in detail. The artery 4, the aorta, can be segmented by marginal space learning using a part-based aorta model. The other major coronary arteries 3, 5, 6 can be extracted by a model-driven algorithm that exploits their special relation to the automatically segmented heart chambers in order to use a vessel-specific region of interest as constrained for the confinement of the centerlines. The mentioned algorithms are discussed in detail in the papers Y. Zheng et al., "Four-Chamber Heart Modeling and Automatic Segmentation for 3-D Cardiac CT volumes Using Marginal Space Learning and Steerable Featues", IEEE Transactions on Medical Imaging, 27 (11), p. 1668, 2008; Y. Zheng "Automatic Aorta Segmentation and Valve Landmark Detection in C-Arm CT: Application to Aortic Valve Implantation", International Conference on Medical Image Computing and Computer-Assisted Intervention, p. 476, Springer 2010 and Y. Zheng "Robust and Accurate Coronary Artery Centerline Extraction in CTA by Combining Model-Driven and Data-Driven Approaches", International Conference on Medical Image Computing and Computer-Assisted Intervention, p. 74, Springer 2013. The resulting main coronary centerlines 17 - 20 are then used to generate individual atlases for each patient.

To merge these atlases into a common probabilistic atlas the individual computer tomography datasets are first registered in step S3. To achieve this, one of the datasets is chosen to define the common coordinate system. In each of the datasets the pericardium 12 is segmented as discussed in the previously cited paper by H. Zhong. Principle component analysis can then be applied to the segmented pericardium 12 to determine a center of mass and the eigenvector corresponding to the biggest eigenvalue. This information can be used to perform a rigid registration of the individual datasets.

The individual atlases that are now transformed to a common coordinate system are then converted into distance maps in step S4. For each voxel a distance to each of the centerlines 17 - 20 is calculated and stored. A mean atlas is then created in step S5 by averaging these distances between the individual datasets. The resulting reference dataset provides an average distance to the centerlines 17 - 20 of the arteries 3 - 6. The averaged distances are shown schematically by the lines 13 - 16 in Fig. 1. The lines 13, 15, 16 correspond to average euklidean distances of 10 mm from the respective centerline 17, 19, 20. The line 14 corresponds to an average euklidean distance from the centerline 9 of 2,5 mm. Due to the distance averaging that is performed on a per voxel basis, the lines 13 - 16 do typically not form circles and are typically not centered around the center line 17 - 20.

In step S6 the non-contrasted coronary computed-tomography dataset is recorded for the patient for whom the coronary artery calcium should be detected and labeled. In step S7 the candidate groups of voxels 7-11 are detected as already discussed above.

To classify the candidate groups of voxels 7 - 11, a feature vector is used that comprises distance values for each candidate group of voxels 7-11 that describe the respective distance from the centerlines 17 - 20. To determine these distances the recorded computer tomography dataset is first registered to the reference dataset in step S8. This can e.g. be achieved by segmenting the pericardium 12 in the recorded computer tomography dataset and then use the segmented pericardium 12 to register the dataset as previously described for the registration of the individual computer tomography datasets during the generation of the reference dataset. Due to this registration each voxel in the recorded computer tomography dataset is assigned to a certain position or voxel in the reference dataset. Since the distance to the centerlines 17 - 20 is known for each position or voxel in the reference dataset, these distances can be directly read from the reference dataset or e.g. interpolated from the reference dataset.

In step S9 a feature vector is determined for each of the candidate groups of voxels 7-11. This feature vector comprises the distances to the centerlines 17 - 20 that are determined as previously discussed. The position can be determined for the voxel that is the center of gravity of the respective candidate group of voxels 7 - 11 or for the voxel with the highest absorption in the group. Additionally to the distances to the centerlines 17 - 20 differences between all pairs of distances are also calculated and used as features. Therefore the feature vector contains four distances and six differences between distances. These features describe vague spatial knowledge about the position of the individual candidate groups of voxels 7-11.

As an additional spatial feature a relative position to the previously segmented pericardium 12 can be used. A bounding box can be defined that surrounds the pericardium 12 and the position of the respective candidate group of voxels in three dimensions in this bounding box can be used as three additional features. Additionally the distance to the closest point of the pericardium 12 can be used as a feature. The segmented pericardium therefore provides four additional features for each feature vector.

Especially for a distinction between coronary artery calcium and other features intrinsic features of the candidate group of voxels 7-11 can be added to the feature vector. These features can be the volume of the candidate group of voxels and the mean value, the maximum value and the variance of the voxel values of the candidate group of voxels 7-11. Additionally it is advantageous to consider the immediate surroundings of the candidate group of voxels 7-11. Therefore a hull group of voxels is defined that surrounds the candidate group of voxels 7-11. The feature vector can comprise multiple parameters that depend on the voxel values of the hull voxels. The mean value, the variance, the minimum, the maximum and the difference between the maximum and the minimum of these voxel values can be used. Additionally a difference between the mean values of the voxels of the hull group and the respective candidate group of voxels 7-11 can be used as a feature.

To provide morphological information about the individual candidate groups of voxels 7-11 some of the features can be calculated by convolving the provided dataset with a given kernel, especially a Gaussian kernel, and taking the pixel value at the position of one of the voxels of the candidate group of voxels 7 - 11 as the feature. Preferably multiple Gaussian kernels with different standard deviations of e.g. 0.5 mm, 1.0 mm, 2.0 mm, 3.0 mm and 4.0 mm can be used.

If all the previously discussed parameters or features are used in the feature vector for each of the candidate groups of voxels 7 - 11, a respective feature vector with 29 features results. A classifier can then be applied to this feature vector to determine if the candidate group of voxels 7 - 11 represents coronary artery calcium and which of the arteries 3 - 6 contains that coronary artery calcium. It can e.g. be determined that the candidate group of voxels 7 is coronary artery calcium in the right coronary artery 3, the candidate groups of voxels 8, 9 are coronary artery calcium in the aorta and therefore in the artery 4, the candidate group of voxels 10 is coronary artery calcium in the left anterior descending coronary artery 5 and the candidate group of voxels 11 is coronary artery calcium in the left circumflex coronary artery 6. This classification is performed in step S10.

The classifier used for the classification can be trained by machine learning using multiple training datasets. Preferably a random forest classifier is used. The training datasets can e.g. comprise sets of a non-contrasted coronary computed-tomography and a cardiac computed tomography angiography data for multiple patients. If both these datasets are recorded for each of the patients, robust algorithms are known to classify the coronary artery calcium for each patient. Therefore the feature vector and the desired result of the classification can be determined for each patient and a supervised learning can be implemented. Obviously the training could also be performed by using manually labeled datasets depicting coronary artery calcium.

The training of am random forest classifier is well known in the prior art and will not be discussed in detail.

After step S10 the coronary artery calcium is known and labeled. It is therefore now possible to perform a calcium scoring in step S11. Due to the robust labelling the coronary calcium can be calculated for each of the arteries 3 - 6 separately and/or an overall calcium score can be calculated, wherein weighting factors for the different candidate group of voxels 7-11 can be determined depending on the classification of the respective candidate group of voxels 7 - 11.

Fig. 3 shows a computer tomography device 21 that comprises a processing unit 22 that is configured to perform the previously discussed method. It is therefore possible to directly calculate calcium scores via the computer tomography device 21 itself. In an alternative embodiment it would be possible to use a separate processing unit to perform the previously discussed method.

The method can be implemented via a computer program that can be directly loaded into a memory unit 23 of the processing unit 22. The computer program can comprise instructions for performing the steps of the previously discussed method. It is also possible to provide the computer program in the form of a computer-readable storage medium (not shown) containing electronically readable instructions comprising the computer program.

Although the present invention has been described in detail with reference to the preferred embodiment, the present invention is not limited by the disclosed examples from which the skilled person is able to derive other variations without departing from the scope of the invention.

## Claims

1. Method for detecting and labelling coronary artery calcium, comprising the steps:
- Providing medical imaging dataset, in particular a computer tomography dataset, of a region of interest (2) comprising at least two different arteries (3-6),
- Detecting at least one candidate voxel or group of voxels (7-11) for the presence of coronary artery calcium,
- Providing a reference dataset that describes a respective distance of each position in the reference dataset to at least one artery (3-6) or to a feature of the respective artery (3-6),
- Determining at least one distance value for each candidate voxel or group of voxels (7-11) that describes a respective distance to at least one artery (3-6) or to a feature of the respective artery (3-6) by determining a respective position of the candidate voxel or group of voxels (7-11) in the reference dataset by performing a registration between the provided dataset and the reference dataset,
- Determining a feature vector for each candidate voxel or group of voxels (7-11) that describes multiple parameters of the candidate voxel or group of voxels (7-11), wherein the distance value is one of the parameters,
- Applying a classifier to the feature vector to label the candidate voxel or group of voxels (7-11).

2. Method according to claim 1, **characterized in that** the classifier classifies, if the candidate voxel or group of voxels (7-11) depicts coronary artery calcium and which one of the arteries (3-6) comprises the coronary artery calcium.

3. Method according to claim 1 or 2, **characterized in that** the classifier is trained by machine learning using multiple training datasets.

4. Method according to one of the preceding claims, **characterized in that** the classifier is a random forest classifier.

5. Method according to one of the preceding claims, **characterized in that** the reference dataset is generated from individual medical imaging datasets, in particular a computer tomography datasets, recorded from several patients.

6. Method according to claim 5, **characterized in that** a centerline (17-20) for at least one of the arteries (3-6) is determined in each of the individual computer tomography datasets, wherein a distance map is calculated for each individual medical imaging dataset, in particular a computer tomography dataset, that describes the distance of each position of the respective dataset from the respective centerline (17-20), wherein the reference dataset is determined from the distance maps.

7. Method according to one of the preceding claims, **characterized in that** the feature vector comprises respective distance values that describe a respective distance to at least two arteries (3-6) or to features of these arteries (3-6) and/or at least one difference value describing the difference between the respective distances of the candidate voxel or group of voxels (7-11) to two arteries (3-6) or to respective features of two arteries (3-6) and/or the position of the candidate voxel or group of voxels (7-11) with respect to the pericardium (12) and/or the distance of the candidate voxel or group of voxels (7-11) from the pericardium (12) as parameters.

8. Method according to one of the preceding claims, wherein the feature vector comprises a respective parameter that describes the volume of the candidate group of voxels (7-11) and/or the mean value and/or the maximum value and/or the variance of the voxel values of the candidate group of voxels (7-11).

9. Method according to one of the preceding claims, **characterized in that** a hull group of voxels is defined that surrounds the candidate voxel or group of voxels (7-11), wherein the feature vector comprises at least one parameter that depends on the voxel values of the voxels of the hull group.

10. Method according to one of the preceding claims, **characterized in that** the feature vector comprises at least one parameter that is calculated by convolving the provided dataset with a given kernel and taking the voxel value at the position of the candidate voxel or one of the voxels of the candidate group of voxels (7-11).

11. Method according to one of the preceding claims, **characterized in that** the labeled candidate voxels or groups of voxels (7-11) are used to calculate a separate calcium score for each of the arteries (3-6) or **in that** the a calcium score is calculated by weighting the candidate voxels or groups of voxels (7-11) according to their labels.

12. Processing unit, especially processing unit of a computer tomography device (21), configured to perform the method of one of the preceding claims.

13. Computer program that can be directly loaded into a memory unit (23) of a processing unit (22), especially a processing (22) unit of a computer tomography device (21), the computer program comprising instructions for performing the steps of the method of one of the claims 1 to 11 when the program is executed on the processing unit.

14. Computer-readable storage medium containing electronically readable instructions comprising the computer program according to claim 13.
